# EUROPÄISCHE PATENTSCHRIFT

(11) **EP 2 847 399 B1**
(45) Veröffentlichungstag und Bekanntmachung des Hinweises auf die Patenterteilung: **21.06.2017**
(21) Anmeldenummer: 13720867.4
(22) Anmeldetag: 25.04.2013
(51) Int. Cl.: E04H 15/32, E04H 15/44, B62B 1/12, B62B 1/14

(54) **FAHRELEMENT, INSBESONDERE FAHRELEMENT FÜR EIN ZELTSYSTEM, SOWIE ZELTSYSTEM**
TRANSPORT ELEMENT, IN PARTICULAR TRANSPORT ELEMENT FOR A TENT SYSTEM AND TENT SYSTEM
ELÉMENT DE TRANSPORT, EN PARTICULIER POUR UN SYSTÈME DE TENTE, AINSI QUE LE SYSTÈME DE TENTE

(30) Priorität: 08.05.2012 EP 12167174
(43) Veröffentlichungstag der Anmeldung: 18.03.2015
(73) Patentinhaber: Expotrade Group GmbH, 6844 Altach (AT)
(72) Erfinder: SCHNETZER, Andreas, A-6835 Muntlix (AT)
(74) Vertreter: Rupprecht, Kay
(86) Internationale Anmeldenummer: PCT/EP2013/058657
(87) Internationale Veröffentlichungsnummer: WO 2013/167392

(56) Entgegenhaltungen:
- EP-A1- 2 221 229
- EP-A2- 1 961 692
- CA-A1- 2 533 704
- CN-Y- 201 371 837
- US-A- 6 062 802

## Beschreibung

Die vorliegende Erfindung betrifft ein Fahrelement, insbesondere ein Fahrelement für ein Zeltsystem, sowie ein Zeltsystem bestehend aus einem zumindest teilweise zusammenklappbaren Zelt und wenigstens einem Fahrelement.

Im Zusammenhang mit Freiluftveranstaltungen, Messen, größeren Sportveranstaltungen, Wanderausstellungen oder dergleichen werden Zeltsysteme eingesetzt, die Zelte umfassen bzw. aufweisen, die zusammengeklappt werden können. Diese zusammenklappbaren Zelte können in der Regel mit wenigen Handgriffen errichtet werden, aber auch mit wenigen Handgriffen erneut zusammengelegt werden. Um den Transport dieser zusammenklappbaren Zelte zu erleichtern, weisen diese Zeltsysteme in der Regel Zelttaschen auf, die mit Rollen versehen sind. In diesem Zusammenhang ist es aber ebenfalls bereits bekannt, die Füße der Zeltsysteme, die regelmäßig plattenartig ausgebildet sind, mit aufschiebbaren Rollen zu versehen, so dass das Zelt im zusammengeklappten Zustand verfahren bzw. geschoben werden kann.

Die bislang bekannten Systeme sehen dabei vor, dass jeder einzelne Fuß eines derartigen Zeltes mit einem Rollenelement zu versehen ist. Dies erhöht die Anzahl der Teile des Zeltsystems und erhöht die Gefahr, dass Teile des Zeltsystems verloren gehen. Auch der Einsatz von mit Rollen versehenen Zelttaschen ist mit Nachteilen behaftet, da beispielsweise bei derartigen Taschen die unter hohen Belastungen ausgesetzten Rollen nicht ohne Weiteres ausgetauscht werden können.

Ferner sind aus dem Stand der Technik diverse weitere Fahrelemente bereits bekannt. EP 2 221 229 A1 offenbart ein Fahrelement für ein faltbares Zelt, wobei das Fahrelement insbesondere zwei Rollen, zwei Platten sowie einen U-förmigen Griff aufweist.

Die Druckschrift CA 2 533 704 A1 offenbart ein Fahrgestell, welches für den Transport von Baumaschinen, insbesondere Rüttelplatten, eingesetzt wird. Hierzu weist das Fahrgestell zwei Reifen seitlich des Rahmens auf, wobei zwei zusätzliche, abgewinkelte Führungsschienen vorgesehen sind.

Die Druckschrift CN 201 371 837 Y zeigt ein Fahrelement in Form einer verkehrsüblichen Sackkarre mit einem Rahmengestell, einer Achse in Verbindung mit ausziehbaren Achsen und daran befestigten Rädern.

Die Druckschrift US 6 062 802 A weist eine Vorrichtung zum Verlegen von Bodenplatten auf. Die Vorrichtung umfasst eine U-förmige Plattform zur Aufnahme der Bodenplatten, eine Achse, zwei Räder sowie einen Handgriff. Insbesondere ist hierbei vorgesehen, dass die Plattform höhenverstellbar ist, so dass Bodenplatten auf dafür vorgesehenen Sockel abgelegt werden können.

Die Druckschrift EP 1 961 692 A2 offenbart eine Sackkarre, die zum Transport breiter Lasten durch bewegliche Segmente seitlich expandiert werden kann. Hierzu weist die Sackkarre bewegliche Träger auf, die unter anderem über die Bodenelemente verfügen.

Es ist daher die Aufgabe der vorliegenden Erfindung, ein Zeltsystem sowie ein Fahrelement für ein Zeltsystem der eingangs genannten Art in vorteilhafter Weise weiterzubilden, insbesondere dahingehend, dass ein derartiges Fahrelement einerseits einfach aufgebaut und zugleich andererseits dem Einsatzzweck entsprechend einfach handhabbar ist.

Diese Aufgabe wird erfindungsgemäß gelöst durch ein Fahrelement mit den Merkmalen des Anspruchs 1.

Weitere Ausführungsformen sind in den abhängigen Ansprüchen 2 bis 8 angegeben. Danach ist vorgesehen, dass ein Fahrelement mit wenigstens einem ersten Rad und mit wenigstens einem zweiten Rad, mit wenigstens einem Verbindungselement, mittels dessen das erste Rad und das zweite Rad mittelbar und/oder unmittelbar verbunden sind, und mit wenigstens einem Aufnahmeelement bereitgestellt wird, das derart beschaffen ist, dass mittels des Aufnahmeelements zumindest ein Bodenelement eines zusammenklappbaren Zeltsystems zumindest teilweise aufnehmbar ist. Ferner weisen die Aufnahmeelemente jeweils wenigstens einen abgewinkelten Wandungsabschnitt zur seitlichen Führung der Bodenelemente des zusammengeklappten Zeltsystems auf und jeweils wenigstens einen U-förmigen Wandungsabschnitt zum Umgreifen des Bodenelements.

Dadurch ergibt sich insbesondere der Vorteil, Fahrelement einerseits einfach aufgebaut und zugleich andererseits dem Einsatzzweck entsprechend einfach handhabbar ist.

Der Begriff Rad ist im Zusammenhang mit der Erfindung nicht einschränkend zu verstehen. Insbesondere umfasst der Begriff Rad beispielsweise auch Rollen oder sonstige drehbar abrollbare Elemente, mittels derer das Fahrelement verfahren werden kann.

Insbesondere kann das Fahrelement ein Fahrelement für ein Zeltsystem, beispielsweise für ein vorstehend beschriebenes Zeltsystem aus dem Veranstaltungsbereich sein. Zu dem Zeltsystem kann das Fahrelement gehören.

Das Zelt selbst kann mit wenigen Handgriffen aufgebaut bzw. zusammengefaltet werden. Derartige Zeltsysteme kommen insbesondere bei größeren Freiluftveranstaltungen wie Sportveranstaltungen bzw. Turnieren, Freiluftmessen, Verkaufsveranstaltungen, Catering-Zelten usw. zum Einsatz. Diese Zelte sind beispielsweise derart ausgestaltet, dass sie eine Grundfläche von mehreren Quadratmetern überdecken können, z.B. 3-36 m² Grundfläche. Üblicherweise weisen diese Zelte z.B. vier Eckstangen auf, an deren bodenseitigem Ende, also den Füßen des Zeltes, jeweils wenigstens ein Bodenelement vorgesehen ist. Ein derartiges Bodenelement kann z.B. ein Plattenelement sein, das im aufgestellten Zustand des Zeltes auf dem Boden bzw. der Aufstellfläche aufliegt. Es ist denkbar, dass ein derartiges Bodenelement ein oder mehrere Lochungen oder dergleichen aufweist, durch die z.B. ein Hering oder ein Bolzen zur verbesserten Befestigung und Sicherung des Zeltes hindurch getrieben werden kann.

Mittels des Fahrelementes ist es vorteilhaft möglich, ein zusammengeklapptes Zelt mittels z.B. eines oder mehrerer Bodenelemente sicher in dem bzw. mit dem Aufnahmeelement aufzunehmen und sodann vergleichsweise einfach verfahren zu können. Denkbar ist beispielsweise, das in das Fahrelement eingesetzte Zelt um die Drehachse der beiden Räder des Fahrelementes zu verschwenken und sodann das Zeltsystem insgesamt zu schieben. Die Zeltsystem schiebende bzw. verfahrende Person kann dies beispielsweise dadurch bewerkstelligen, dass die Zelttasche bzw. das zusammengefaltete Zelt, das in das Fahrelement eingesetzt ist, gegriffen wird. Im Unterschied beispielsweise zu einer Sackkarre muss das Fahrelement somit keine gesonderten Griffelemente aufweisen, wodurch kompakte Abmessungen des Fahrelementes ermöglicht werden.

Des Weiteren kann vorgesehen sein, dass das Verbindungselement eine Verbindungsstange ist. Durch eine Verbindungsstange kann eine besonders einfache und zuverlässige Verbindung der beiden Räder hergestellt werden. Als Verbindungsstange ist beispielsweise ein Verbindungsrohr oder auch eine Stange, welche rund, mehrkantig oder vielkantig sein kann sowie ein Profil aufweisen bzw. aus verschiedenen Materialien bestehen kann, die zumindest teilweise aus Vollmaterial besteht, möglich. Denkbar ist, dass die Verbindungstange an ihren beiden Enden jeweils die Lager der beiden Räder des Fahrelementes aufnimmt. Es ist auch möglich, dass die Verbindungsstange als Rohr ausgeführt ist und die beiden Räder auf eine gemeinsame Radachse montiert sind. Eine derartige Radachse kann z.B. in der Verbindungsstange zumindest teilweise geführt sein.

Es ist ferner möglich, dass die Verbindungsstange verkürzbar und/oder verlängerbar ist. Dadurch wird es möglich, den Abstand der beiden Räder individuell und bedarfsgerecht einstellen zu können. Hierdurch ergibt sich der Vorteil, dass auch zusammengelegte Zelte mit unterschiedlichen Abmessungen mit demselben Fahrelement verfahren werden können.

Insbesondere ist vorteilhaft denkbar, dass die Verbindungsstange teleskopierbar ist.

Außerdem kann vorgesehen sein, dass das Aufnahmeelement zumindest teilweise mittelbar und/oder unmittelbar an dem Verbindungselement befestigt ist.

Ferner ist denkbar, dass das Aufnahmeelement einen Bodenabschnitt aufweist, auf den das Bodenelement des zusammenklappbaren Zeltsystems aufstellbar und/oder aufschiebbar ist. Das Aufnahmeelement kann beispielsweise einen Bodenabschnitt aufweisen, der im Wesentlichen den Abmessungen des Bodenelementes des zusammenklappbaren Zeltsystems bzw. Zeltes entspricht. Bei einer derartigen vorteilhaften Ausführungsform liegt z.B. die Unterseite des Bodenelementes des Zeltes auf der Oberseite des Bodenelementes auf. Das Fahrelement und das zusammengelegte Zelt können somit vorteilhaft und sicher zusammengefügt werden, da eine ausreichend große Auflagefläche für die Bodenelemente des Zeltes besteht. Das Aufnahmeelement weist wenigstens einen U-förmigen Wandungsabschnitt auf. Der Wandungsabschnitt kann beispielsweise im Randbereich des Bodenabschnittes des Fahrelementes, vorzugsweise im dem Verbindungselement zugewandten Randbereich des Bodenabschnittes des Fahrelementes angeordnet sein. Der U-förmige Wandungsabschnitt kann sich ganz oder auch nur teilweise über die Länge einer Seite des Bodenabschnittes des Fahrelementes erstrecken.

Insbesondere kann vorgesehen sein, dass der U-förmige Wandungsabschnitt derart bemessen und/oder beschaffen ist, dass er zumindest ein Bodenelement eines zusammenklappbaren Zeltsystems umgreift oder umgreifen bzw. untergreifen kann.

Es ist ferner denkbar, dass das Aufnahmeelement wenigstens einen abgewinkelten Wandungsabschnitt aufweist. Beispielsweise kann vorgesehen sein, dass der wenigstens eine abgewinkelte Wandungsabschnitt, welcher auch als L-Profil ausgeführt sein kann, an der Seite des Bodenabschnittes des Fahrelementes befindet, der einem Rad auf dieser Seite des Fahrelementes zugewandt ist. Der abgewinkelte Wandungsabschnitt kann somit zur Stabilisierung bzw. seitlichen Stabilisierung des Bodenelementes des Zeltes dienen, da der abgewinkelte Wandungsabschnitt vorteilhafterweise derart beschaffen sein kann, dass er ein seitliches Herunterrutschen des Bodenelementes von dem Bodenabschnitt verhindert.

Darüber hinaus kann vorgesehen sein, dass wenigstens zwei Aufnahmeelemente vorgesehen sind.

Es ist ferner vorteilhaft möglich, dass die wenigstens zwei Aufnahmeelemente derart an dem Verbindungselement befestigt sind, dass die wenigstens zwei Aufnahmeelemente im Wesentlichen in einer Ebene angeordnet sind, wobei insbesondere die Bodenabschnitte der wenigstens zwei Aufnahmeelemente im Wesentlichen in einer Ebene angeordnet sind.

Außerdem kann vorgesehen sein, dass die wenigstens zwei Aufnahmeelemente im Wesentlichen spiegelsymmetrisch ausgebildet sind. Denkbar ist in diesem Zusammenhang, dass beispielsweise die beiden Aufnahmeelemente jeweils benachbart zu jeweils einem der beiden Räder angeordnet sind. Des Weiteren betrifft die vorliegende Erfindung ein Zeltsystem mit den Merkmalen des Anspruches 9.

Danach ist vorgesehen, dass ein Zeltsystem aus wenigstens einem zumindest teilweise zusammenklappbaren Zelt besteht und wenigstens einem Fahrelement nach einem der Ansprüche 1-8. Das Zeltsystem kann insbesondere ein Zeltsystem aus dem Veranstaltungsbereich sein. Derartige Zeltsysteme zeichnen sich dadurch aus, dass sie ein Zelt bestehend aus Plane und Gestänge sowie z.B. eine Zelttasche zur Aufnahme des zusammengefalteten Zeltes aufweisen.

Gemäß einer Ausführungsform des Zeltsystems weist das Zelt wenigstens zwei Bodenelemente auf, insbesondere vier Bodenelemente oder mehr, wobei das erste Bodenelement durch ein erstes Aufnahmeelement aufnehmbar ist und wobei das zweite Bodenelement durch ein zweites Aufnahmeelement aufnehmbar ist.

Weitere Einzelheiten und Vorteile der Erfindung sollen nun anhand eines in den Zeichnungen dargestellten Ausführungsbeispiels näher erläutert werden. Es zeigen:
- Figur 1:: eine Draufsicht auf ein erfindungsgemäßes Fahrelement für ein erfindungsgemäßes Zeltsystem;
- Figur 2:: eine perspektivische Ansicht auf das in Figur 1 gezeigte Fahrelement.

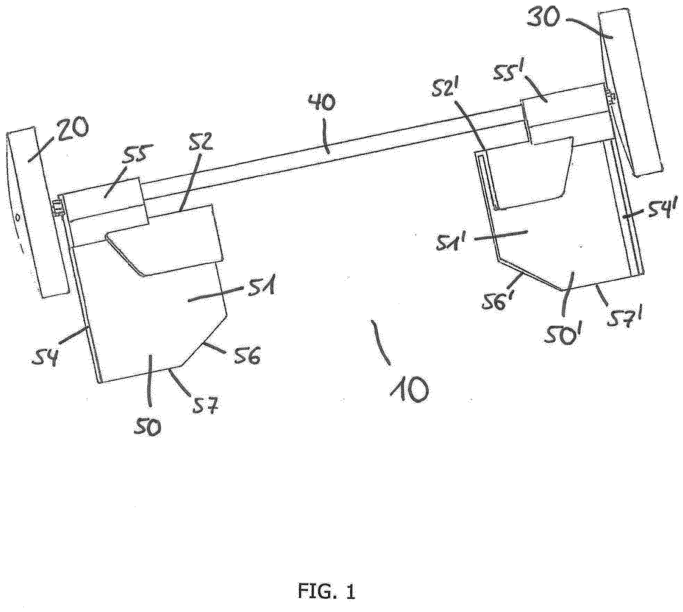

Figur 1 zeigt in der Draufsicht ein Fahrelement 10 für ein nicht näher dargestelltes Zeltsystem. Dabei weist das Fahrelement 10 ein erstes Rad 20 und zweites Rad 30 auf, die mittels eines als Verbindungsstange 40 ausgeführten Verbindungselementes 40 miteinander verbunden sind.

In der in Figur 1 dargestellten Ausführungsform ist die Verbindungsstange 40 hinsichtlich der Länge nicht verstellbar ausgeführt. Es ist jedoch grundsätzlich denkbar und möglich, dass die Verbindungsstange 40 verkürzbar und/oder verlängerbar ist. Insbesondere kann vorgesehen sein, dass eine teleskopierbare Verbindungsstange 40 eingesetzt werden kann, die eine entsprechende Einstellung je nach Bedarf des Abstandes der beiden Räder 20, 30 des Fahrelements 10 erlaubt.

An der Verbindungsstange 40, an der die Räder 20, 30 drehbar angelenkt sind, sind zwei Aufnahmeelemente 50, 50' befestigt. Die beiden Aufnahmeelemente 50, 50' dienen zur Aufnahme der Bodenelemente eines zusammenklappbaren Zeltsystems, wobei die Bodenelemente des zusammenklappbaren Zeltsystems vorzugsweise zwei plattenartige Füße des Zeltsystems sind. So kann insbesondere vorgesehen sein, dass beispielsweise bei einem Zelt mit vier derartigen Füßen zwei plattenartige Füße durch die Aufnahmeelemente 50, 50' aufgenommen werden können. Die Aufnahmeelemente 50, 50' sind starr mittels Befestigungsabschnitten 55, 55' an der Verbindungsstange 40 befestigt, so dass die Bodenabschnitte 51, 51' der Aufnahmeelemente 50, 50' sich stets im Wesentlichen in einer Ebene befinden.

Auf die Bodenabschnitte 51, 51' können die zwei Bodenelemente eines zusammenklappbaren Zeltsystems aufgestellt bzw. aufgeschoben werden. Um das Aufschieben zu erleichtern sind die Bodenabschnitte 51, 51' mit einer Abschrägung 56, 56' versehen. Auch ist denkbar, dass die Bodenabschnitte 51, 51' zusätzlich an der Kante 57, 57', über die Bodenelemente des Zeltes auf die Bodenabschnitte 51, 51' aufgeschoben werden können, eine geringere Materialstärke aufweisen, als beispielsweise in dem Bereich der Bodenabschnitte 51, 51', die der Verbindungsstange 40 zugewandt ist.

Die Aufnahmeelemente 50, 50' weisen in dem der Verbindungsstange 40 zugewandten Bereich einen U-förmigen Wandungsabschnitt 52, 52' auf, der derart bemessen bzw. beschaffen ist, dass er das Bodenelement des Zeltes jeweils entsprechend umgreift bzw. umgreifen kann, so dass das Bodenelement sowohl nach oben, als auch nach unten geführt ist. Es ist erwünscht, dass der U-förmige Wandungsabschnitt derart bemessen ist, dass der Abstand der beiden Schenkel des U-förmigen Wandungsabschnittes einen derartigen Abstand aufweist, dass das plattenartige Bodenelement des zusammenklappbaren Zeltsystems klemmend bzw. leicht klemmend gehalten werden kann.

Zur seitlichen Führung der Bodenelemente des zusammengeklappten Zeltsystems sind ferner bei den Aufnahmeelementen 50, 50' abgewinkelte Wandungsabschnitte 54, 54' vorgesehen.

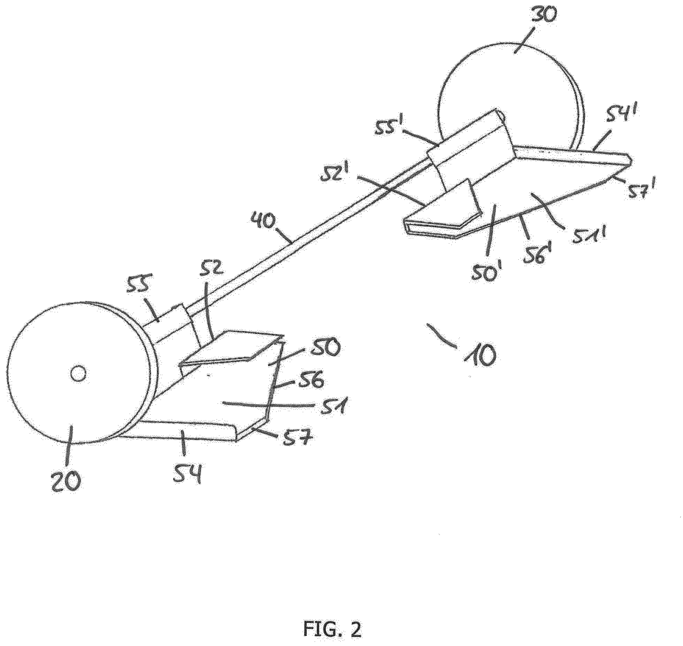

Figur 2 zeigt das in Figur 1 gezeigte Fahrelement 10 nochmals in einer perspektivischen Darstellung. Auf das Fahrelement 10 kann somit ein zusammengeklapptes Zelt eines Zeltsystems bestehend aus einem derartigen zusammenklappbaren Zelt und wenigstens einem Fahrelement, wie es in Figur 1 und 2 gezeigt ist, aufgeschoben werden. Denkbar ist beispielsweise, dass das Zelt im zusammengeklappten Zustand einen im Wesentlichen quaderförmigen Umriss hat bzw. eine im Wesentlichen quaderförmige Kontur hat, wobei die Bodenelemente bzw. Füße des Zeltsystems (gedanklich) eine Fläche bzw. Aufstellfläche des quaderförmigen Umrisses bzw. der quaderförmigen Kontur des zusammengeklappten Zeltes beschreiben. Sodann können zwei Bodenelemente auf die Aufnahmeelemente 50, 50' des Fahrelements 10 aufgesetzt bzw. aufgeschoben werden, um sodann das gesamte Zeltsystem auf dem Fahrelement 10 verfahren zu können.

### Bezugszeichenliste

- 10: Fahrelement
- 20: Rad
- 30: Rad
- 40: Verbindungselement; Verbindungsstange
- 50: Aufnahmeelement
- 50': Aufnahmeelement
- 51: Bodenabschnitt
- 51': Bodenabschnitt
- 52: U-förmiger Wandungsabschnitt
- 52': U-förmiger Wandungsabschnitt
- 54: abgewinkelter Wandungsabschnitt
- 54': abgewinkelter Wandungsabschnitt
- 55: Befestigungsabschnitt
- 55': Befestigungsabschnitt
- 56: Abschrägung
- 56': Abschrägung
- 57: Kante
- 57': Kante

## Patentansprüche

1. Fahrelement (10), insbesondere Fahrelement (10) für ein Zeltsystem, mit wenigstens einem ersten Rad (20) und mit wenigstens einem zweiten Rad (30), mit wenigstens einem Verbindungselement (40), mittels dessen das erste Rad (20) und das zweite Rad (30) mittelbar und/oder unmittelbar verbunden sind, und mit wenigstens zwei Aufnahmeelementen (50, 50'), die derart beschaffen sind, dass mittels der Aufnahmeelemente (50, 50') zumindest ein Bodenelement eines zusammenklappbaren Zeltsystems zumindest teilweise aufnehmbar ist, wobei die Aufnahmeelemente (50, 50') jeweils wenigstens einen abgewinkelten Wandungsabschnitt (54, 54') zur seitlichen Führung der Bodenelemente des zusammengeklappten Zeltsystems aufweisen, und wobei die Aufnahmeelemente (50, 50') jeweils wenigstens einen U-förmigen Wandungsabschnitt (52, 52') zum Umgreifen des Bodenelements aufweisen.

2. Fahrelement (10) nach Anspruch 1,
**dadurch gekennzeichnet, dass**
das Verbindungselement (40) eine Verbindungsstange (40) ist.

3. Fahrelement (10) nach Anspruch 2,
**dadurch gekennzeichnet, dass**
die Verbindungsstange (40) verkürzbar und/oder verlängerbar ist.

4. Fahrelement (10) nach Anspruch 2 oder 3,
**dadurch gekennzeichnet, dass**
die Verbindungsstange (40) teleskopierbar ist.

5. Fahrelement (10) nach einem der Ansprüche 1 bis 4
**dadurch gekennzeichnet, dass** die Aufnahmeelemente (50, 50') zumindest teilweise mittelbar und/oder unmittelbar an dem Verbindungselement (40) befestigt sind.

6. Fahrelement (10) nach einem der Ansprüche 1 bis 5,
**dadurch gekennzeichnet, dass** die Aufnahmeelemente (50, 50') einen Bodenabschnitt (51, 51') aufweisen, auf den das Bodenelement des zusammenklappbaren Zeltsystems aufstellbar und/oder aufschiebbar ist.

7. Fahrelement (10) nach einem der Ansprüche 1 bis 6
**dadurch gekennzeichnet, dass**
die wenigstens zwei Aufnahmeelemente (50, 50') derart an dem Verbindungselement (40) befestigt sind, dass die wenigstens zwei Aufnahmeelemente (50, 50') im Wesentlichen in einer Ebene angeordnet sind, wobei insbesondere die Bodenabschnitte (51, 51') der wenigstens zwei Aufnahmeelemente (50, 50') im Wesentlichen in einer Ebene angeordnet sind.

8. Fahrelement (10) nach einem der Ansprüche 1 bis 7,
**dadurch gekennzeichnet, dass**
die wenigstens zwei Aufnahmeelemente (50, 50') im Wesentlichen spiegelsymmetrisch ausgebildet sind.

9. Zeltsystem bestehend aus wenigstens einem zumindest teilweise zusammenklappbaren Zelt und wenigstens einem Fahrelement (10) nach einem der Ansprüche 1 bis 8.

10. Zeltsystem nach Anspruch 9,
**dadurch gekennzeichnet, dass**
das Zelt wenigstens zwei Bodenelemente aufweist, insbesondere vier Bodenelemente oder mehr aufweist, wobei das erste Bodenelement durch ein erstes Aufnahmeelement (50) aufnehmbar ist und wobei das zweite Bodenelement durch ein zweites Aufnahmeelement (50') aufnehmbar ist.

## Claims

1. A transport element (10), in particular a transport element (10) for a tent system, comprising at least one first wheel (20) and at least one second wheel (30), at least one connecting element (40), by means of which the first wheel (20) and the second wheel (30) are indirectly and/or directly connected, and at least two receiving elements (50, 50') which are provided such that at least one floor element of a collapsible tent system can be at least partially accommodated by means of said receiving elements (50, 50'), wherein each respective receiving element (50, 50') comprises at least one angled wall section (54, 54') for laterally guiding the floor element of the collapsible tent system, and wherein each respective receiving element (50, 50') comprises at least one U-shaped wall section (52, 52') to engage around the floor element.

2. The transport element (10) according to claim 1,
**characterized in that**
the connecting element (40) is a connecting rod (40).

3. The transport element (10) according to claim 2,
**characterized in that**
the connecting rod (40) can be shortened and/or extended.

4. The transport element (10) according to claim 2 or 3,
**characterized in that**
the connecting rod (40) is telescopic.

5. The transport element (10) according to one of claims 1 to 4,
**characterized in that**
at least part of the receiving elements (50, 50') are indirectly and/or directly secured to the connecting element (40).

6. The transport element (10) according to one of claims 1 to 5,
**characterized in that**
the receiving elements (50, 50') comprise a floor section (51, 51') onto which the floor element of the collapsible tent system can be positioned and/or slid.

7. The transport element (10) according to one of claims 1 to 6,
**characterized in that**
the at least two receiving elements (50, 50') are secured to the connecting element (40) such that said at least two receiving elements (50, 50') are substantially arranged in one plane, whereby in particular the floor sections (51, 51') of the at least two receiving elements (50, 50') are substantially arranged in one plane.

8. The transport element (10) according to one of claims 1 to 7,
**characterized in that**
the at least two receiving elements (50, 50') are of substantially mirror-symmetrical configuration.

9. A tent system consisting of at least one at least partially collapsible tent and at least one transport element (10) in accordance with one of claims 1 to 8.

10. The tent system according to claim 9,
**characterized in that**
the tent comprises at least two floor elements, in particular four or more floor elements, wherein the first floor element can be received by a first receiving element (50) and wherein the second floor element can be received by a second receiving element (50').

## Revendications

1. Élément de déplacement (10), en particulier élément de déplacement (10) pour un système de tente, comprenant au moins une première roue (20) et comprenant au moins une seconde roue (30), et au moins un élément de liaison (40), au moyen duquel la première roue (20) et la seconde roue (30) sont reliées directement et/ou indirectement, et comprenant au moins deux éléments récepteurs (50, 50'), qui sont réalisés de telle façon qu'au moyen des éléments récepteurs (50, 50') au moins un élément de sol d'un système de tente repliable est susceptible d'être reçu au moins partiellement, dans lequel les éléments récepteurs (50, 50') comprennent respectivement au moins une portion de paroi en équerre (54, 54') pour le guidage latéral des éléments de sol du système de tente replié, et dans lequel les éléments récepteurs (50, 50') comprennent respectivement au moins une portion de paroi en forme de U (52, 52') pour enserrer l'élément de sol.

2. Élément de déplacement (10) selon la revendication 1,
**caractérisé en ce que** l'élément de liaison (40) est une barre de liaison (40).

3. Élément de déplacement (10) selon la revendication 2,
**caractérisé en ce que** la barre de liaison (40) est susceptible d'être raccourcie et/ou rallongée.

4. Élément de déplacement (10) selon la revendication 2 ou 3,
**caractérisé en ce que** la barre de liaison (40) est télescopique.

5. Élément de déplacement (10) selon l'une des revendications 1 à 4,
**caractérisé en ce que** les éléments récepteurs (50, 50') sont fixés sur l'élément de liaison (40) au moins partiellement, directement et/ou indirectement.

6. Élément de déplacement (10) selon l'une des revendications 1 à 5,
**caractérisé en ce que** les éléments récepteurs (50, 50') comprennent une portion de sol (51, 51') sur laquelle l'élément de sol du système de tente repliée est susceptible d'être dressé et/ou tiré.

7. Élément de déplacement (10) selon l'une des revendications 1 à 6,
**caractérisé en ce que** lesdits au moins deux éléments récepteurs (50, 50') sont fixés sur l'élément de liaison (40) de telle manière que lesdits au moins deux éléments récepteurs (50, 50') sont agencés sensiblement dans un plan, et en particulier les portions de sol (51, 51') desdits au moins deux éléments récepteurs (50, 50') sont agencées sensiblement dans un plan.

8. Élément de déplacement (10) selon l'une des revendications 1 à 7,
**caractérisé en ce que** lesdits au moins deux éléments récepteurs (50, 50') sont réalisés sensiblement symétriques par rapport à un plan.

9. Système de tente constitué d'au moins une tente susceptible d'être au moins partiellement repliée et d'au moins un élément de déplacement (10) selon l'une des revendications 1 à 8.

10. Système de tente selon la revendication 9,
**caractérisé en ce que** la tente comprend au moins deux éléments de sol, et comprend en particulier quatre éléments de sol ou plus, dans lesquels le premier élément de sol est susceptible d'être reçu par un premier élément récepteur (50) et dans lesquels le second élément de sol est susceptible d'être reçu par un second élément récepteur (50').
